# EUROPEAN PATENT APPLICATION

(11) **EP 4 566 741 A1**
(43) Date of publication of application: **11.06.2025**
(21) Application number: 23850180.3
(22) Date of filing: 04.08.2023
(51) Int. Cl.: B23B 27/22

(54) **CUTTING TOOL**

(30) Priority: 05.08.2022 JP 2022125283
(71) Applicant: Mitsubishi Materials Corporation, Tokyo 100-8117 (JP)
(72) Inventor: OTSUKA Shumpei, Tokyo 100-8117 (JP); KUMAGAI Satoshi, Tokyo 100-8117 (JP)
(74) Representative: Hoffmann Eitle
(86) International application number: PCT/JP2023/028607
(87) International publication number: WO 2024/029627

(57) **Abstract**

A cutting tool includes a rake face (1), a flank face (2), a cutting edge (3) disposed in a ridgeline portion where the rake face (1) and the flank face (2) are connected and having a V-shape in a plan view of which the rake face (1) is viewed from a front surface, and a chip breaker (4) disposed on the rake face (1). The chip breaker (4) includes a first protruded portion (41) configured to protrude to an upper side from the rake face (1), a second protruded portion (42) configured to protrude to the upper side from the rake face (1), disposed on a rear side of the first protruded portion (41), and extending toward a front side as the second protruded portion (42) is separated from a bisector of the cutting edge (3) in a left-right direction, and a third protruded portion (43) configured to protrude to the upper side from the rake face (1) and disposed on a front side of the first protruded portion (41). The first protruded portion (41) and the second protruded portion (42) further protrude to the upper side than the cutting edge (3), and the height of the third protruded portion (43) is lower than the height of the first protruded portion (41) in an up-down direction.

## Description

### TECHNICAL FIELD

The present invention relates to a cutting tool.

Priority is claimed on Japanese Patent Application No. 2022-125283, filed on August 5, 2022, the content of which is incorporated herein by reference.

### BACKGROUND ART

In the related art, a cutting tool such as a cutting insert used when a cutting operation is performed on a workpiece such as metal is known (for example, Patent Document 1 and Patent Document 2).

This type of the cutting tool includes a rake face, a flank face, a cutting edge disposed in a ridgeline portion where the rake face and the flank face are connected and having a V-shape in a plan view of which the rake face is viewed from a front surface, and a chip breaker disposed on the rake face.

### Citation List

### Patent Documents

Patent Document 1: Japanese Patent No. 6413516(B)
Patent Document 2: Japanese Patent No. 4967721(B)

### SUMMARY OF INVENTION

### Technical Problem

For example, when the distance from a corner edge (nose R) located at a tip portion of a cutting edge to a chip breaker is long, chips are less likely to collide with the chip breaker, and are likely to spread during shallow cutting for a small depth of cut. Consequently, chip disposal performance deteriorates.

On the other hand, when the distance from the corner edge to the chip breaker is simply shortened, chips are excessively curled, and collide with a machined surface of the workpiece. Consequently, machined surface accuracy is degraded.

One object of the present invention is to provide a cutting tool which can satisfactorily maintain chip disposal performance regardless of a depth of cut or the like and can stably improve machined surface accuracy.

### Solution to Problem

### [Aspect 1 of Present Invention]

A cutting tool includes a rake face, a flank face, a cutting edge disposed in a ridgeline portion where the rake face and the flank face are connected and having a V-shape in a plan view of which the rake face is viewed from a front surface, and a chip breaker disposed on the rake face. An extending direction of a bisector of the cutting edge in the plan view is set as a front-rear direction, a direction orthogonal to the bisector in the plan view is set as a left-right direction, and a direction orthogonal to the front-rear direction and the left-right direction is set as an up-down direction. The chip breaker includes a first protruded portion configured to protrude to an upper side from the rake face, a second protruded portion configured to protrude to the upper side from the rake face, disposed on a rear side of the first protruded portion, and extending toward a front side as the second protruded portion is separated from the bisector in the left-right direction, and a third protruded portion configured to protrude to the upper side from the rake face and disposed on a front side of the first protruded portion. The first protruded portion and the second protruded portion further protrude to the upper side than the cutting edge, and the height of the third protruded portion is lower than the height of the first protruded portion in the up-down direction.

**In** the cutting tool according to the present invention, for example, in a case of deep cutting (deep feeding) for a large depth of cut, chips generated by the cutting edge come into contact with the first protruded portion and the second protruded portion of the chip breaker. That is, the chips are compressed and curled to be pinched between the two protruded portions aligned in the front-rear direction while being two-point supported by the protruded portions. Therefore, thick chips can be stably curled, and chip disposal performance is satisfactorily maintained.

Specifically, the second protruded portion extends toward a front side as the second protruded portion is separated from the bisector in the left-right direction. An extending direction of the second protruded portion is substantially the same as a direction in which the chips generated by the cutting edge flow out on the rake face. Therefore, the chips are stably curled by the two protruded portions while being guided in an outflow direction by the second protruded portion. Therefore, the chip disposal performance is more stable.

In addition, during shallow cutting for a small depth of cut, the chips generated by the cutting edge come into contact with the third protruded portion located on the front side in the chip breaker. Therefore, spreading of thin chips is suppressed, and the thin chips are stably broken.

Specifically, the height of the third protruded portion is lower than the height of the first protruded portion in the up-down direction, that is, in the the third protruded portion, the amount of protruded from the rake face is small. Therefore, excessive curling of the chips in contact with the third protruded portion is suppressed, and collision of the chips with a machined surface of a workpiece is suppressed. **In** this manner, machined surface accuracy is satisfactorily maintained.

As described above, according to the present invention, the chip disposal performance can be satisfactorily maintained regardless of the depth of cut or the like, and the machined surface accuracy can be stably improved.

### [Aspect 2 of Present Invention]

In the cutting tool according to Aspect 1, the second protruded portion further protrudes to the upper side than the first protruded portion.

In this case, the chips flowing out while being two-point supported by the first protruded portion and the second protruded portion are spirally rolled and stably curled due to a height difference between the protruded portions. The chip disposal performance is more stably improved.

### [Aspect 3 of Present Invention]

In the cutting tool according to Aspect 1 or 2, the chip breaker includes a breaker wall disposed on a rear side of the second protruded portion and further protruding to the upper side than the second protruded portion.

In this case, the chips passing over the second protruded portion to the rear side collide with the breaker wall, and thus, chip disposal is stably performed.

### [Aspect 4 of Present Invention]

In the cutting tool according to any one of Aspects 1 to 3, the cutting edge includes a corner edge having a protruded curved shape, and a pair of straight edges connected to both ends of the corner edge and each extending linearly, and the third protruded portion is located on a lower side of at least the corner edge in the cutting edge.

In this case, since the third protruded portion is disposed on a lower side of the corner edge, excessive curling of the chips generated by the corner edge and coming into contact with the third protruded portion is stably suppressed in a case of shallow cutting. In this manner, the machined surface accuracy is stably improved.

### [Aspect 5 of Present Invention]

In the cutting tool according to Aspect 4, the third protruded portion is located on a front side of a center of a curvature radius of the corner edge in the plan view.

In this case, chips generated by the corner edge in a case of shallow cutting are stably brought into contact with the third protruded portion. Chip disposal performance of the third protruded portion is more stably achieved.

### [Aspect 6 of Present Invention]

In the cutting tool according to Aspect 4 or 5, the first protruded portion overlaps the center of the curvature radius of the corner edge in the plan view.

In this case, during cutting, chips generated in the vicinity of a boundary between the corner edge and the straight edge in the cutting edge or in the corner edge are stably brought into contact with the first protruded portion. The chip disposal performance of the first protruded portion is more stably achieved.

### [Aspect 7 of Present Invention]

In the cutting tool according to any one of aspects 1 to 6, an angle formed between a ridgeline of the second protruded portion and the bisector in the plan view is 30° or larger and 60° or smaller.

When the angle is 30° or larger and 60° or smaller, the chip disposal performance of the second protruded portion is more stably achieved regardless of an opening angle (angle formed between the pair of straight edges) of the cutting edge in the plan view, a tool posture during cutting, or the like.

When the angle is smaller than 30° or exceeds 60°, in some cases, the outflow direction of the chips and the extending direction of the second protruded portion may be significantly different from each other depending on the opening angle of the cutting edge, the tool posture during cutting, or the like. Accordingly, the chip disposal performance may be affected.

### Advantageous Effects of Invention

According to the cutting tool in the aspect of the present invention, chip disposal performance can be satisfactorily maintained regardless of a depth of cut or the like, and machined surface accuracy can be stably improved.

### BRIEF DESCRIPTION OF DRAWINGS

[FIG. 1] FIG. 1 is a perspective view showing a cutting tool of the present embodiment.
[FIG. 2] FIG. 2 is a plan view (top view) showing the cutting tool of the present embodiment.
[FIG. 3] FIG. 3 is a side view showing the cutting tool of the present embodiment.
[FIG. 4] FIG. 4 is a perspective view showing an enlarged portion IV in FIG. 1.
[FIG. 5] FIG. 5 is a plan view (top view) showing a portion of the cutting tool.
[FIG. 6] FIG. 6 is a cross-sectional view showing a cross section taken along line VI-VI of FIG. 5.
[FIG. 7] FIG. 7 is a cross-sectional view showing a cross section taken along line VII-VII in FIG. 5.
[FIG. 8] FIG. 8 is a cross-sectional view showing a cross section taken along line VIII-VIII in FIG. 5.
[FIG. 9] FIG. 9 is a cross-sectional view showing a cross section taken along line IX-IX in FIG. 5.
[FIG. 10] FIG. 10 is a cross-sectional view showing a cross section taken along line X-X in FIG. 5.

### DESCRIPTION OF EMBODIMENTS

A cutting tool 10 according to an embodiment of the present invention will be described with reference to the drawings. The cutting tool 10 of the present embodiment is a cutting insert used in an indexable cutter that performs turning (cutting operation) on a workpiece made of metal, for example. **In** the present embodiment, in some cases, the cutting tool 10 may be simply referred to as a tool or the like.

Although not particularly shown, the indexable cutter includes a holder and the cutting tool (cutting insert) 10. For example, the holder is made of a steel material. The holder has a recessed insert mounting seat disposed in a tip portion of the holder. For example, the cutting tool 10 is made of cemented carbide. The cutting tool 10 is integrally formed of a single member. The cutting tool 10 is attached to the insert mounting seat to be attachable and detachable.

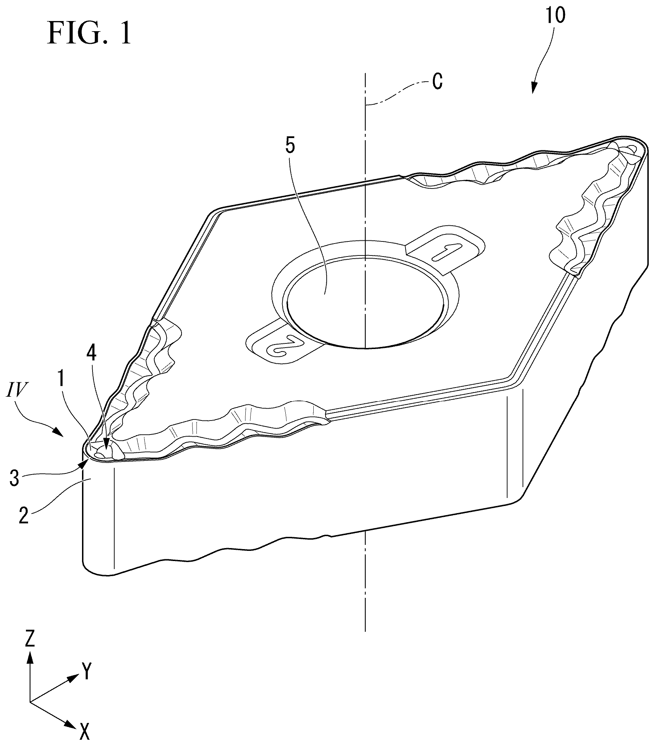

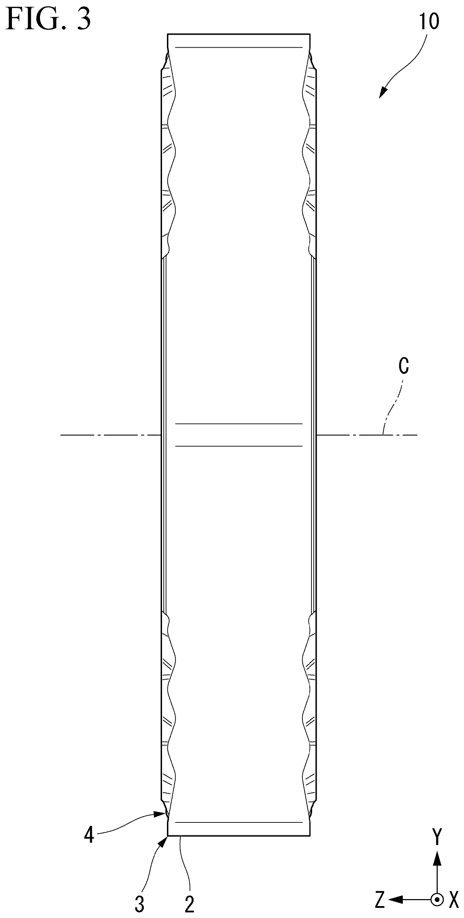

As shown in FIGS. 1 to 3, the cutting tool 10 has a plate shape. In the present embodiment, the cutting tool 10 has a polygonal plate shape, and specifically, has a quadrangular plate shape such as a rhomboid plate shape. More specifically, for example, the cutting tool 10 of the present embodiment has an outer shape of a rhomboid insert (cutting insert) in conformity with a general ISO standard. However, without being limited thereto, the cutting tool 10 may have a polygonal plate shape such as a triangular plate shape, a pentagonal plate shape, or a hexagonal plate shape.

The cutting tool 10 has a polygonal plate shape in which an insert center axis C is set as a center, and a pair of plate surfaces (front surface and back surface) thereof faces an extending direction of the insert center axis C (insert axial direction). In the present specification, in some cases, a direction orthogonal to the insert center axis C may be referred to as an insert radial direction, and a turning direction around the insert center axis C may be referred to as an insert circumferential direction. In the insert radial direction, a direction closer to the insert center axis C is an inside of the insert radial direction, and a direction separated from the insert center axis C is an outer side of the insert radial direction.

In the present embodiment, the cutting tool 10 has a front-back inversion symmetric shape in the insert axial direction. That is, the cutting tool 10 is a so-called double-sided cutting insert. In addition, the cutting tool 10 has a rotationally symmetric shape by 180° when the insert center axis C is set as the center.

The cutting tool 10 includes a rake face 1, a flank face 2, a cutting edge 3 disposed in a ridgeline portion where the rake face 1 and the flank face 2 are connected, a chip breaker 4 disposed on the rake face 1, and a fitting hole 5.

The rake face 1 and the chip breaker 4 are disposed on at least one plate surface (front surface) in a pair of plate surfaces having a polygonal shape of the cutting tool 10. Specifically, the rake face 1 and the chip breaker 4 are disposed at predetermined corner portions (in the present embodiment, acute angle corner portions) in a plurality of corner portions of one plate surface. In addition, the flank face 2 is disposed on an outer peripheral surface of the cutting tool 10. Specifically, the flank face 2 is disposed at a predetermined corner portion (in the present embodiment, an acute angle corner portion) in the outer peripheral surface of the cutting tool 10. In addition, the cutting edge 3 is disposed in a ridgeline portion where one plate surface of the cutting tool 10 and the outer peripheral surface are connected. Specifically, the cutting edge 3 is disposed in a predetermined corner portion (in the present embodiment, an acute angle corner portion) in the ridgeline portion of the cutting tool 10.

The predetermined corner portion of the cutting tool 10 in which the rake face 1, the flank face 2, the cutting edge 3, and the chip breaker 4 are disposed may be rephrased as an "edge portion".

In the present embodiment, the cutting tool 10 has a front-back inversion symmetric shape and a rotationally symmetric shape by 180° around the insert center axis C. Therefore, four sets of the rake face 1, the flank face 2, the cutting edge 3, and the chip breaker 4 are provided in four corner portions including two acute angle corner portions on one plate surface (front surface) side of the cutting tool 10 and two acute angle corner portions on the other plate surface (back surface) side of the cutting tool 10. In addition, one fitting hole 5 is provided in the cutting tool 10.

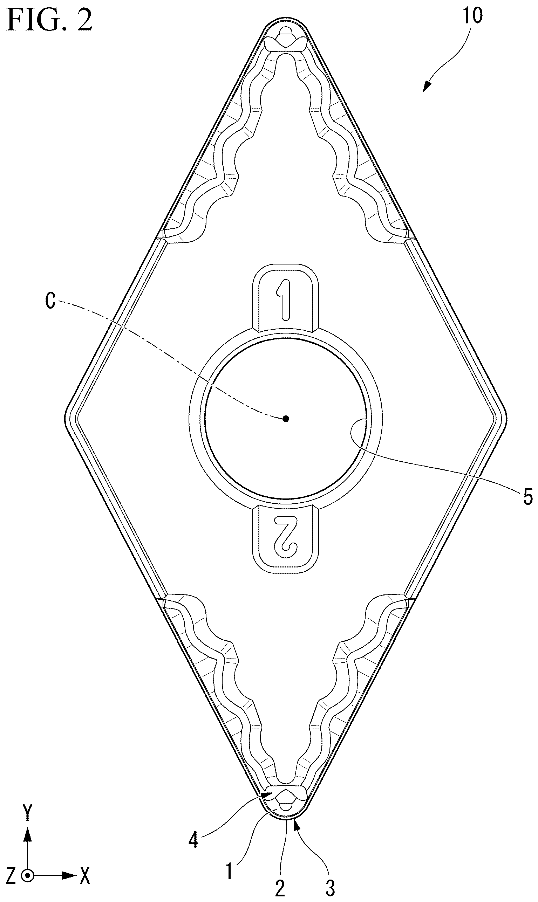

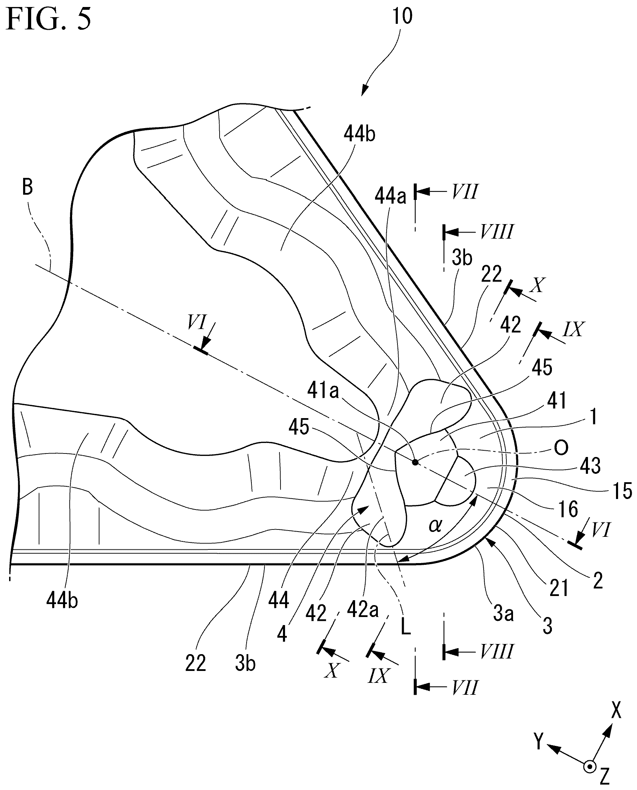

FIG. 2 is a plan view (top view) when the cutting tool 10 is viewed in the insert axial direction. In addition, FIG. 5 is a plan view (top view) when a vicinity (predetermined corner portion, an edge portion) of the cutting edge 3 of the cutting tool 10 is viewed in the insert axial direction. As shown in FIGS. 2 and 5, the cutting edge 3 has a V-shape in a plan view when the rake face 1 is viewed from a front surface. Specifically, the cutting edge 3 includes a corner edge 3a having a protruded curved shape and a pair of straight edges 3b connected to both ends of the corner edge 3a and extending linearly.

### [Definition of Direction]

In the present embodiment, an XYZ orthogonal coordinate system (three-dimensional orthogonal coordinate system) is appropriately set in each drawing, and each configuration will be described.

In a plan view of the cutting tool 10 shown in FIG. 5, an extending direction of a bisector B of the cutting edge 3 having a V-shape will be referred to as a front-rear direction. Specifically, the bisector B corresponds to a bisector of an angle of a central angle formed between the pair of straight edges 3b in the plan view. The front-rear direction corresponds to a Y-axis direction in each drawing. In the present embodiment, the bisector B is orthogonal to the insert center axis C. That is, the bisector B extends along a predetermined insert radial direction. In the front-rear direction, a direction from the insert center axis C toward the corner edge 3a will be referred to as a front side (-Y side), and a direction from the corner edge 3a toward the insert center axis C will be referred to as a rear side (+Y side).

In addition, in the plan view of the cutting tool 10 shown in FIG. 5, a direction orthogonal to the bisector B will be referred to as a left-right direction. The left-right direction corresponds to an X-axis direction in each drawing. In the left-right direction, as shown in FIG. 5, a direction from the bisector B toward a left side will be referred to as a left side (-X side), and a direction from the bisector B toward a right side will be referred to as a right side (+X side) when the rake face 1 is viewed from the front surface. One in the left side and the right side may be rephrased as one side in the left-right direction, and the other may be rephrased as the other side in the left-right direction.

In addition, a direction closer to the bisector B in the left-right direction will be referred to as an inside (central side), and a direction separated from the bisector B will be referred to as an outside.

In addition, a direction orthogonal to the front-rear direction and the left-right direction will be referred to as an up-down direction. The up-down direction corresponds to a Z-axis direction in each drawing. In the up-down direction, a facing direction of the rake face 1 will be referred to as an upper side (+Z side), and a direction opposite to the upper side will be referred to as a lower side (-Z side). In the present embodiment, the up-down direction corresponds to the insert axial direction.

As shown in FIG. 5, in the present embodiment, a predetermined corner portion (edge portion) of the cutting tool 10 is formed in a left-right symmetric shape in which the bisector B is set as a symmetry axis.

In the present embodiment, the front side, the rear side, the left side, the right side, the upper side, and the lower side are merely terms for describing a relative positional relationship between the respective portions, and an actual disposition relationship or the like when a tool is used or the like may be a disposition relationship or the like other than the disposition relationship indicated by the above-described terms.

### [Rake Face]

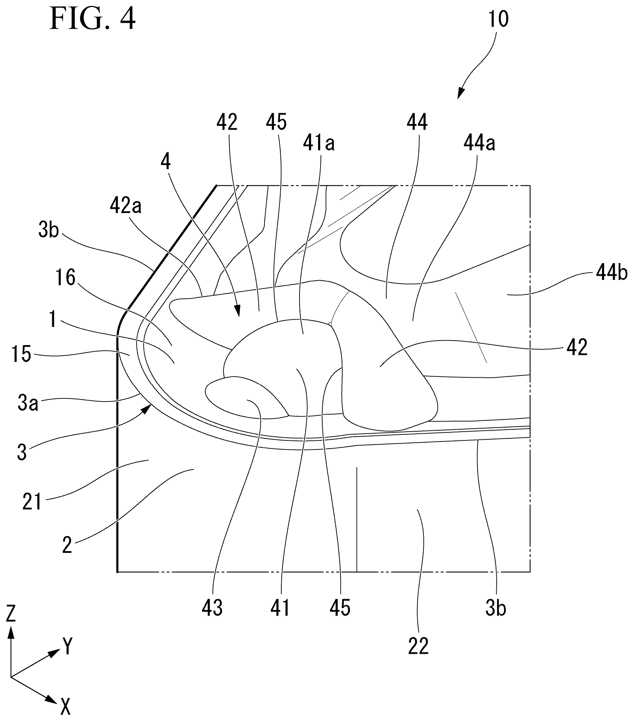

As shown in FIGS. 4 and 5, the rake face 1 is disposed inside the cutting edge 3 on a plate surface of the cutting tool 10 which faces the insert axial direction. Specifically, the rake face 1 is disposed adjacent to the cutting edge 3 inside the cutting edge 3 in the insert radial direction. The rake face 1 includes a land 15 and an inclined surface 16.

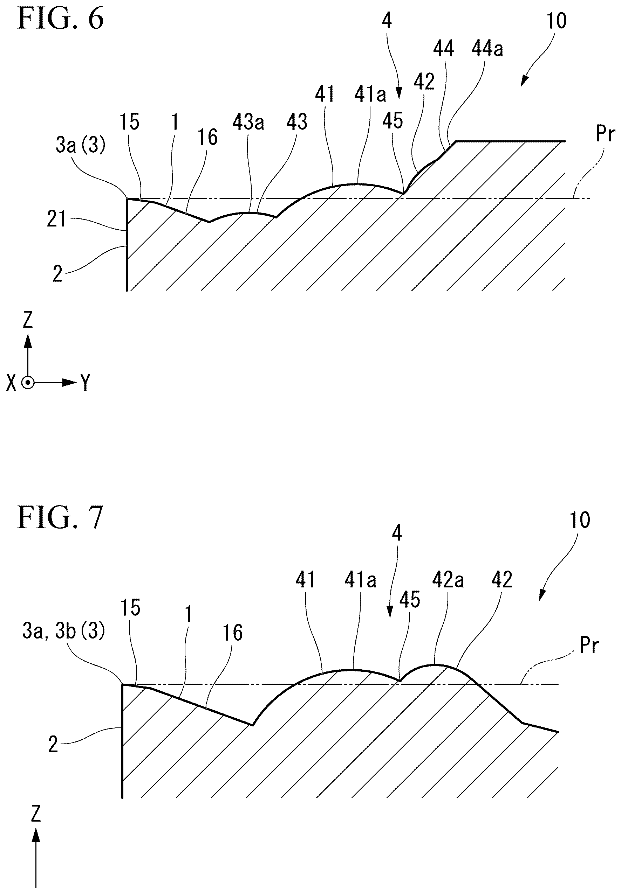

The land 15 is a portion directly connected to the cutting edge 3 in the rake face 1. The land 15 extends along the cutting edge 3, and has a V-shape as a whole in a plan view shown in FIG. 5. As shown in respective cross-sectional views (vertical cross-sectional views) in FIGS. 6 and 7, in the present embodiment, the land 15 extends while being inclined toward the lower side as the land 15 is separated from the cutting edge 3 along a virtual plane (hereinafter, referred to as a tool reference plane Pr) passing through the cutting edge 3 and perpendicular to the up-down direction. That is, the land 15 has a rake angle of a positive angle (regular angle).

In the present embodiment, the "rake angle" refers to an inclination angle in each portion (each component) of the rake face 1 with respect to the tool reference plane Pr.

As shown in FIGS. 4 and 5, the inclined surface 16 is a portion disposed inside the land 15 in the rake face 1. That is, the inclined surface 16 is disposed farther separated from the cutting edge 3 than the land 15. The inclined surface 16 is connected to the land 15. The inclined surface 16 extends along the cutting edge 3, and has a substantially V-shape as a whole in the plan view shown in FIG. 5. In the plan view, the inclined surface 16 is inclined toward the lower side as the inclined surface 16 is separated from the cutting edge 3 in a direction orthogonal to the cutting edge 3. Therefore, the rake angle of the inclined surface 16 is a positive angle (regular angle).

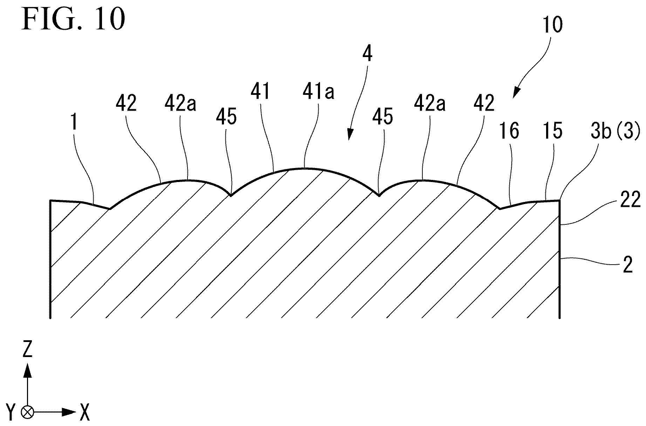

As shown in FIGS. 6 to 10, the rake angle of the inclined surface 16 is larger than the rake angle of the land 15 on a right angle side.

### [Flank Face]

As shown in FIG. 4, the flank face 2 is disposed on an outer peripheral surface of the cutting tool 10 which faces the outside in the insert radial direction. Specifically, the flank face 2 is disposed over a portion facing the front side, the left side, and the right side in a predetermined corner portion in the outer peripheral surface of the cutting tool 10. The flank face 2 extends in the insert circumferential direction. The flank face 2 is disposed adjacent to the cutting edge 3 on a lower side of the cutting edge 3.

In the present embodiment, the cutting tool 10 is a so-called negative insert of a double-sided type, and the flank face 2 is provided parallel to the insert center axis C. That is, a clearance angle of the flank face 2 is set to 0°.

In the present embodiment, for example, as shown in FIG. 6, the "clearance angle" refers to an inclination angle of the flank face 2 with respect to a virtual straight-line (not shown) passing through the cutting edge 3 and orthogonal to the tool reference plane Pr in a cross-sectional view perpendicular to the cutting edge 3.

As shown in FIGS. 4 and 5, the flank face 2 has a corner flank face 21 and a pair of straight flank faces 22 connected to both ends of the corner flank face 21 in the insert circumferential direction.

The corner flank face 21 is a portion connected to the corner edge 3a in the flank face 2. The corner flank face 21 is disposed in a portion in the flank face 2 which faces the front side (-Y side). Specifically, the corner flank face 21 is disposed in a front end portion of the flank face 2, and has a protruded curved face shape protruding toward the front side.

The straight flank face 22 is a portion connected to the straight edge 3b in the flank face 2. The straight flank face 22 has a planar shape.

One straight flank face 22 in the pair of straight flank faces 22 is disposed in a portion of the flank face 2 which faces the left side (-X side). One straight flank face 22 is connected to one straight edge 3b located on the left side of the bisector B in the pair of straight edges 3b. One straight flank face 22 extends along the one straight edge 3b.

In the pair of straight flank faces 22, the other straight flank face 22 is disposed in a portion in the flank face 2 which faces the right side (+X side). The other straight flank face 22 is connected to the other straight edge 3b located on the right side of the bisector B in the pair of straight edges 3b. The other straight flank face 22 extends along the other straight edge 3b.

### [Cutting edge]

As described above, the cutting edge 3 includes the corner edge 3a and the pair of straight edges 3b. The corner edge 3a in the cutting edge 3 has a curved shape protruding toward the front side (-Y side), and specifically, has a protruded arc shape. In the present embodiment, the corner edge 3a extends along a surface direction of the tool reference plane Pr perpendicular to the up-down direction. The corner edge 3a as a whole is included in a plane of the tool reference plane Pr. However, without being limited thereto, the corner edge 3a may be provided to be inclined with respect to the tool reference plane Pr.

The pair of straight edges 3b is connected to both ends in an edge length direction in which the corner edge 3a extends. In the plan view shown in FIG. 5, each of the straight edges 3b extends along each tangent line in contact with both ends of the corner edge 3a.

One straight edge 3b in the pair of straight edges 3b is connected to one end (left end) of the corner edge 3a in the edge length direction. The one straight edge 3b linearly extends toward the left side (-X side) as the one straight edge 3b faces the rear side (+Y side) from a portion connected to the corner edge 3a. In the present embodiment, the one straight edge 3b extends while being inclined toward the lower side as the one straight edge 3b is separated from the portion connected to the corner edge 3a along the edge length direction in which the first straight edge 3b extends.

The other straight edge 3b in the pair of straight edges 3b is connected to the other end (right end) of the corner edge 3a in the edge length direction. The other straight edge 3b linearly extends toward the right side (+X side) as the other straight edge 3b faces the rear side (+Y side) from the portion connected to the corner edge 3a. In the present embodiment, the other straight edge 3b extends while being inclined toward the lower side as the other straight edge 3b is separated from the portion connected to the corner edge 3a in the edge length direction in which the other straight edge 3b extends.

### [Chip Breaker]

As shown in FIGS. 4 and 5, the chip breaker 4 is disposed inside the cutting edge 3 in a plate surface on which the cutting tool 10 faces the insert axial direction. At least a portion of the chip breaker 4 is disposed on the rake face 1. The chip breaker 4 includes a first protruded portion 41, a second protruded portion 42, a third protruded portion 43, and a breaker wall 44.

The first protruded portion 41 protrudes to the upper side from the rake face 1. Specifically, the first protruded portion 41 includes a portion disposed on the inclined surface 16 in the rake face 1. The first protruded portion 41 is formed in a protruded shape to form a portion of a sphere. The front surface (protruded surface) of the first protruded portion 41 has a protruded curved face shape, and specifically, is formed in a protruded spherical surface shape to form a portion of a spherical surface.

In the plan view shown in FIG. 5, the first protruded portion 41 is located on the bisector B. In addition, in the plan view, the first protruded portion 41 is disposed to overlap a center O of a curvature radius of the corner edge 3a. More specifically, in the present embodiment, in the plan view, a top portion 41a of the first protruded portion 41 located in an upper end portion overlaps the center O of the curvature radius of the corner edge 3a.

As shown in FIG. 6, the top portion 41a of the first protruded portion 41 is disposed on the upper side of the tool reference plane Pr passing through the corner edge 3a located on the uppermost side in the cutting edge 3 and widened in a direction perpendicular to the up-down direction. That is, the first protruded portion 41 protrudes to the upper side of the cutting edge 3.

In addition, as shown in FIG. 6, a front side end portion in the first protruded portion 41 is located on the lower side of the corner edge 3a. In addition, as shown in FIG. 5 and FIG. 7 showing a cross section taken along line VII-VII in FIG. 5, both ends in the first protruded portion 41 in the left-right direction (in FIG. 7, a left side end portion of the first protruded portion 41) are located on the lower side of the corner edge 3a.

As shown in FIGS. 4 and 5, the second protruded portion 42 protrudes to the upper side from the rake face 1, and is disposed on the rear side of the first protruded portion 41. Specifically, the second protruded portion 42 includes a portion disposed on the inclined surface 16 in the rake face 1. The second protruded portion 42 extends toward the front side as the second protruded portion 42 is separated from the bisector B in the left-right direction. The second protruded portion 42 is formed in a rib shape. The front surface of the second protruded portion 42 has a protruded curved face shape.

The pair of second protruded portions 42 is provided on the left side (-X side) and the right side (+X side) of the bisector B. The pair of second protruded portions 42 is formed in a mutually left-right symmetric shape while the bisector B is set as the symmetry axis. Therefore, hereinafter, any one in the pair of second protruded portions 42 will be mainly described.

An end portion of the second protruded portion 42 on the inner side (central side) in the left-right direction is located on the bisector B. In the plan view shown in FIG. 5, a width dimension of an inner side portion in the second protruded portion 42 in the left-right direction increases as the inner side portion faces the outer side in the left-right direction from the bisector B. In addition, in the plan view, a width dimension of an outer side portion in the second protruded portion 42 in the left-right direction decreases as the outer side portion faces the outer side in the left-right direction.

In addition, in the plan view shown in FIG. 5, the second protruded portion 42 includes a portion (outer end portion in the left-right direction) located outside the center O of the curvature radius of the corner edge 3a in the left-right direction and a portion (inner end portion in the left-right direction) located on the rear side of the center O. The second protruded portion 42 is disposed to surround the center O of the curvature radius of the corner edge 3a and the first protruded portion 41 from the outside and the rear side in the left-right direction.

A reference numeral L indicated by a straight line of a one-dot chain line in FIG. 5 represents an extending direction of the ridgeline 42a of the second protruded portion 42. That is, the ridgeline 42a of the second protruded portion 42 extends linearly. In the plan view shown in FIG. 5, for example, an angle α formed between the ridgeline 42a of the second protruded portion 42 and the bisector B is 30° or larger and 60° or smaller.

As shown in FIG. 4, the ridgeline 42a of the second protruded portion 42 extends to the upper side as the ridgeline 42a faces the inner end portion from the outer end portion of the second protruded portion 42 in the left-right direction along the extending direction of the ridgeline 42a. That is, in the second protruded portion 42, the amount of protruded to the upper side increases as the second protruded portion 42 is closer to the bisector B along the extending direction of the ridgeline 42a.

As shown in FIG. 6, the second protruded portion 42 has a portion located on the upper side of the tool reference plane Pr passing through the corner edge 3a located on an uppermost side in the cutting edge 3 and widened in a direction perpendicular to the up-down direction. That is, the second protruded portion 42 protrudes to the upper side of the cutting edge 3.

As shown in FIGS. 6 and 7, the second protruded portion 42 has a portion disposed on the upper side of the top portion 41a located on the uppermost side in the first protruded portion 41. That is, the second protruded portion 42 protrudes to the upper side of the first protruded portion 41.

As shown in FIGS. 4 and 5, the third protruded portion 43 protrudes to the upper side from the rake face 1, and is disposed on the front side of the first protruded portion 41. Specifically, the third protruded portion 43 is disposed on the inclined surface 16 in the rake face 1. The third protruded portion 43 is formed in a protruded shape to form a portion of a sphere. The front surface (protruded surface) of the third protruded portion 43 is formed in a protruded curved face shape, and specifically, is formed in a protruded spherical surface shape to form a portion of a spherical surface. In the present embodiment, the curvature radius of the protruded surface (protruded curved face) of the third protruded portion 43 is smaller than the curvature radius of the protruded surface (protruded curved face) of the first protruded portion 41.

In the plan view shown in FIG. 5, the third protruded portion 43 is located on the bisector B. In addition, in the plan view, the third protruded portion 43 is disposed on the front side of the center O of the curvature radius of the corner edge 3a.

As shown in FIG. 6, the third protruded portion 43 as a whole is disposed on the lower side of the tool reference plane Pr widened in a direction passing through the corner edge 3a and perpendicular to the up-down direction. That is, the third protruded portion 43 is located on the lower side of at least the corner edge 3a in the cutting edge 3.

In addition, the top portion 43a located on the uppermost side in the third protruded portion 43 is located on the lower side of the top portion 41a located on the uppermost side in the first protruded portion 41. That is, the height of the third protruded portion 43 is lower than the height of the first protruded portion 41 in the up-down direction.

As shown in FIGS. 4 to 6, the breaker wall 44 is disposed on the rear side of the second protruded portion 42, and protrudes to the upper side of the second protruded portion 42. The breaker wall 44 includes a wall surface located on the upper side of the second protruded portion 42 and facing the front side and the left-right direction. In the present embodiment, the breaker wall 44 includes a conical surface portion 44a disposed adjacent to the rear side of the second protruded portion 42, and a wavy surface portion 44b disposed on the rear side of the conical surface portion 44a.

The conical surface portion 44a has a conical surface shape protruded toward the front side. The conical surface portion 44a has a protruded curved face shape facing the front side, the left side, and the right side, and extends in the insert circumferential direction. The conical surface portion 44a is provided such that a diameter decreases toward the upper side.

As shown in FIG. 5, the wavy surface portion 44b is connected to the outer side end portion of the conical surface portion 44a in the left-right direction, and extends toward the outer side in the left-right direction as the wavy surface portion 44b faces the rear side. A pair of the wavy surface portions 44b is provided on the left side (-X side) and the right side (+X side) of the bisector B. The pair of wavy surface portions 44b is formed in a mutually left-right symmetric shape while the bisector B is set as the symmetry axis. Therefore, hereinafter, any one in the pair of wavy surface portions 44b will be mainly described.

The wavy surface portion 44b is formed in a waveform to alternately face the inner side (central side) and the outer side in the left-right direction (to meander) as the wavy surface portion 44b is separated from the portion connected to the conical surface portion 44a along the extending direction of the wavy surface portion 44b. In addition, the wavy surface portion 44b is inclined to be closer to the bisector B as the wavy surface portion 44b faces the upper side.

As shown in FIGS. 4 and 5, the chip breaker 4 further includes a valley portion 45 disposed between the first protruded portion 41 and the second protruded portion 42. The valley portion 45 is located in a boundary portion between the first protruded portion 41 and the second protruded portion 42, and has a groove shape recessed to the lower side. As shown in FIG. 5, the valley portion 45 extends toward the front side as the valley portion 45 is separated from the bisector B in the left-right direction. The extending direction of the valley portion 45 is substantially the same as the extending direction of the ridgeline 42a of the second protruded portion 42.

A pair of the valley portion 45 is provided on the left side (-X side) and the right side (+X side) of the bisector B. The pair of valley portions 45 is formed in a mutually left-right symmetric shape while the bisector B is set as the symmetry axis. Therefore, hereinafter, any one in the pair of valley portions 45 will be mainly described.

The inner side (central side) end portion of the valley portion 45 in the left-right direction is located on the bisector B. The outer side end portion of the valley portion 45 in the left-right direction is connected to the inclined surface 16 of the rake face 1. As shown in FIGS. 6 to 8, in the valley portion 45, the position of a valley bottom (flute bottom) in the up-down direction is lowered as the valley portion 45 faces an outer end portion from an inner end portion in the left-right direction along the extending direction of the valley portion 45.

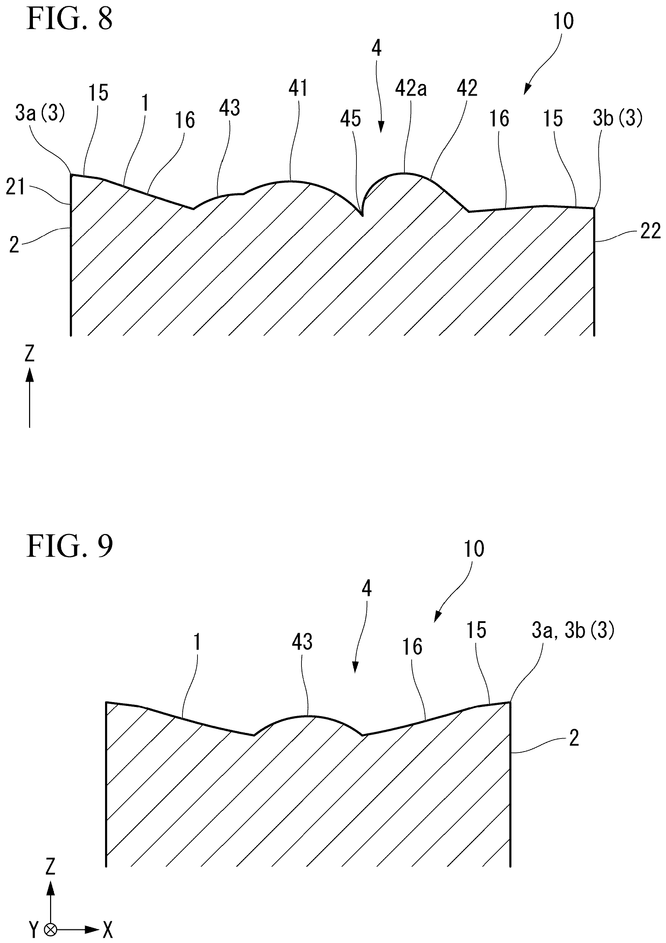

Specifically, as shown in FIGS. 6 and 7, in the inner side portion in the valley portion 45 in the left-right direction, the valley bottom of the valley portion 45 is located on the upper side of the tool reference plane Pr passing through the cutting edge 3 and widened in a direction perpendicular to the up-down direction. In addition, as shown in FIG. 8, in the outer side portion (particularly, an outer end portion) in the valley portion 45 in the left-right direction, the valley bottom of the valley portion 45 is located on the lower side of the tool reference plane Pr (that is, the lower side of the cutting edge 3) (not shown).

### [Fitting Hole]

As shown in FIGS. 1 and 2, the fitting hole 5 penetrates the cutting tool 10 in the insert axial direction, and is open to a pair of plate surfaces (front surface and back surface) of the cutting tool 10. The fitting hole 5 has a circular hole shape in which the insert center axis C is set as the center. Although not particularly shown, a clamp piece, a clamp screw, or the like for fixing the cutting tool 10 to the insert mounting seat of the holder is inserted into the fitting hole 5.

### [Operational Effects of Present Embodiment]

In the cutting tool 10 of the present embodiment described above, for example, during deep cutting (deep feeding) for a large depth of cut, chips generated by the cutting edge 3 come into contact with the first protruded portion 41 and the second protruded portion 42 of the chip breaker 4. That is, the chips are compressed and curled to be pinched between the two protruded portions 41 and 42 aligned in the front-rear direction while being two-point supported by the two protruded portions 41 and 42. Therefore, thick chips can be stably curled, and chip disposal performance is satisfactorily maintained.

Specifically, the second protruded portion 42 extends toward the front side as the second protruded portion 42 is separated from the bisector B in the left-right direction. The extending direction of the second protruded portion 42 is substantially the same as the direction in which the chips generated by the cutting edge 3 flow out on the rake face 1. Therefore, the chips are stably curled by the two protruded portions 41 and 42 while being guided in an outflow direction by the second protruded portion 42. Therefore, the chip disposal performance is more stable.

In addition, during shallow cutting for a small depth of cut, the chips generated by the cutting edge 3 come into contact with the third protruded portion 43 located on the front side in the chip breaker 4. Therefore, spreading of thin chips is suppressed, and the thin chips are stably broken.

Specifically, the height of the third protruded portion 43 is lower than the height of the first protruded portion 41 in the up-down direction, that is, the amount of protruded from the rake face 1 is small. Therefore, excessive curling of the chips in contact with the third protruded portion 43 is suppressed, and collision of the chips with the machined surface of the workpiece is suppressed. In this manner, machined surface accuracy is satisfactorily maintained.

As described above, according to the present embodiment, chip disposal performance can be satisfactorily maintained regardless of the depth of cut or the like, and machined surface accuracy can be stably improved.

In addition, in the present embodiment, the second protruded portion 42 protrudes to the upper side of the first protruded portion 41.

In this case, the chips flowing out while being two-point supported by the first protruded portion 41 and the second protruded portion 42 are spirally rolled and stably curled due to a height difference between the protruded portions 41 and 42. The chip disposal performance is more stably improved.

In addition, in the present embodiment, the chip breaker 4 includes the breaker wall 44 disposed on the rear side of the second protruded portion 42 and protruded to the upper side of the second protruded portion 42.

In this case, the chips passing over the second protruded portion 42 to the rear side collide with the breaker wall 44, and thus, chip disposal is stably performed. In the present embodiment, the chip disposal is satisfactorily performed in such a manner that the chips passing over the second protruded portion 42 come into contact with the conical surface portion 44a.

In addition, in the present embodiment, the third protruded portion 43 is located on the lower side of at least the corner edge 3a in the cutting edge 3.

In this case, the third protruded portion 43 is disposed on the lower side of the corner edge 3a. Therefore, in a case of shallow cutting, excessive curling of the chips generated by the corner edge 3a and coming into contact with the third protruded portion 43 is stably suppressed. In this manner, the machined surface accuracy is stably improved.

In addition, in the present embodiment, the third protruded portion 43 is located on the front side of the center O of the curvature radius of the corner edge 3a in a plan view.

In this case, the chips generated by the corner edge 3a in a case of shallow cutting are stably brought into contact with the third protruded portion 43. Chip disposal performance of the third protruded portion 43 is more stably achieved.

In addition, in the present embodiment, the first protruded portion 41 overlaps the center O of the curvature radius of the corner edge 3a in a plan view.

In this case, during cutting, the chips generated in the vicinity of a boundary between the corner edge 3a and the straight edge 3b in the cutting edge 3 or in the corner edge 3a are stably brought into contact with the first protruded portion 41. The chip disposal performance of the first protruded portion 41 is more stably achieved.

In addition, in the present embodiment, in the plan view shown in FIG. 5, the angle α formed between the ridgeline 42a of the second protruded portion 42 and the bisector B is 30° or larger and 60° or smaller.

When the angle α is 30° or larger and 60° or smaller, the chip disposal performance of the second protruded portion 42 is more stably achieved regardless of the opening angle (angle formed between the pair of straight edges 3b) of the cutting edge 3 in the plan view, the tool posture during cutting, or the like.

When the angle α is smaller than 30° or exceeds 60°, the outflow direction of the chips and the extending direction of the second protruded portion 42 may be significantly different from each other depending on the opening angle of the cutting edge 3, the tool posture during cutting, or the like. Accordingly, the chip disposal performance may be affected.

In addition, in the present embodiment, in the outer side portion (particularly, the outer end portion) in the valley portion 45 in the left-right direction, the valley bottom (flute bottom) of the valley portion 45 is located on the lower side of the cutting edge 3.

In this case, the depth of the valley portion 45 between the protruded portions 41 and 42 is largely secured in the outer side portion in the right-left direction with which the chips start to come into contact in the first protruded portion 41 and the second protruded portion 42, a chip curling function in two-point supporting of the two protruded portions 41 and 42 is more stable. In addition, even when wear of the protruded portions 41 and 42 progresses, the curling function by the two-point supporting is likely to be satisfactorily maintained.

### [Other Configurations Included in Present Invention]

The present invention is not limited to the above-described embodiment, and for example, as will be described below, the configuration or the like can be changed within the scope not departing from the concept of the present invention.

In the above-described embodiment, an example has been described in which the rake angle of the land 15 of the rake face 1 is set to the positive angle (regular angle), but the present invention is not limited thereto. The rake angle of the land 15 may be set to 0° or a negative angle (irregular angle). In addition, the rake face 1 does not need to be provided with the land 15.

In the above-described embodiment, an example has been described in which the clearance angle of the flank face 2 is set to 0°, but the present invention is not limited thereto. Although not particularly shown, the flank face 2 may be inclined toward the inside in the insert radial direction as the flank face 2 is separated from the cutting edge 3 in the insert axial direction. In this case, a predetermined clearance angle is assigned to the flank face 2.

In the above-described embodiment, an example has been described in which the cutting tool 10 is the double-sided type having the front-back inversion symmetric shape, but the present invention is not limited thereto. The cutting tool 10 may be a single-sided type which does not have the front-back inversion symmetric shape.

In the above-described embodiment, an example has been described in which the cutting tool 10 is formed of a single member made of cemented carbide, but the present invention is not limited thereto. Although not particularly shown, for example, the cutting tool 10 may include a base metal portion having a polygonal plate shape, and an edge portion fixed to a recessed portion located at a corner portion of the base metal portion. In this case, for example, the base metal portion is made of cemented carbide, and for example, the edge portion is made of a cubic boron nitride (cBN) sintered body or a polycrystalline diamond (PCD) sintered body. The rake face 1, the flank face 2, the cutting edge 3, and the chip breaker 4 are disposed in the edge portion. The fitting hole 5 is disposed in the base metal portion.

In the above-described embodiment, an example has been described in which the cutting tool 10 is the cutting insert, but the present invention is not limited thereto. The cutting tool according to the present invention may be any cutting tool as long as the cutting tool includes the rake face 1, the flank face 2, the cutting edge 3, and the chip breaker 4, and for example, the cutting tool may be a replaceable head member of the indexable cutter. Alternatively, the cutting tool may be a solid type (integrated) cutter or the like.

In the present invention, the respective configurations described in the above-described embodiment and modification example may be combined within the scope not departing from the concept of the present invention, and additions, omissions, substitutions, and other changes of the configurations can be made. In addition, the present invention is not limited by the above-described embodiment and the like, and is limited only by the appended claims.

### INDUSTRIAL APPLICABILITY

According to the cutting tool of the present invention, the chip disposal performance can be satisfactorily maintained regardless of the depth of cut or the like, and the machined surface accuracy can be stably improved. Therefore, the present invention has industrial applicability.

### REFERENCE SIGNS LIST

1 Rake face
2 Flank face
3 Cutting edge
3a Corner edge
3b Straight edge
4 Chip breaker
10 Cutting tool
41 First protruded portion
42 Second protruded portion
42a(L) Ridgeline
43 Third protruded portion
44 Breaker wall
B Bisector
O Center of curvature radius of corner edge
α Angle

## Claims

1. A cutting tool comprising:
a rake face;
a flank face;
a cutting edge disposed in a ridgeline portion where the rake face and the flank face are connected and having a V-shape in a plan view of which the rake face is viewed from a front surface; and
a chip breaker disposed on the rake face,
wherein an extending direction of a bisector of the cutting edge in the plan view is set as a front-rear direction, a direction orthogonal to the bisector in the plan view is set as a left-right direction, and a direction orthogonal to the front-rear direction and the left-right direction is set as an up-down direction,
the chip breaker includes,
a first protruded portion configured to protrude to an upper side from the rake face,
a second protruded portion configured to protrude to the upper side from the rake face, disposed on a rear side of the first protruded portion, and extending toward a front side as the second protruded portion is separated from the bisector in the left-right direction, and
a third protruded portion configured to protrude to the upper side from the rake face and disposed on a front side of the first protruded portion,
the first protruded portion and the second protruded portion further protrude to the upper side than the cutting edge, and
the height of the third protruded portion is lower than the height of the first protruded portion in the up-down direction.

2. The cutting tool according to Claim 1,
wherein the second protruded portion further protrudes to the upper side than the first protruded portion.

3. The cutting tool according to Claim 1 or 2,
wherein the chip breaker includes a breaker wall disposed on a rear side of the second protruded portion and further protruding to the upper side than the second protruded portion.

4. The cutting tool according to Claim 1 or 2,
wherein the cutting edge includes a corner edge having a protruded curved shape, and a pair of straight edges connected to both ends of the corner edge and each extending linearly, and
the third protruded portion is located on a lower side of at least the corner edge in the cutting edge.

5. The cutting tool according to Claim 4,
wherein the third protruded portion is located on a front side of a center of a curvature radius of the corner edge in the plan view.

6. The cutting tool according to Claim 4,
wherein the first protruded portion overlaps the center of the curvature radius of the corner edge in the plan view.

7. The cutting tool according to Claim 1 or 2,
wherein an angle formed between a ridgeline of the second protruded portion and the bisector in the plan view is 30° or larger and 60° or smaller.
